# EUROPÄISCHE PATENTSCHRIFT

(11) **EP 1 716 789 B1**
(45) Veröffentlichungstag und Bekanntmachung des Hinweises auf die Patenterteilung: **04.07.2007**
(21) Anmeldenummer: 06450043.2
(22) Anmeldetag: 28.03.2006
(51) Int. Cl.: A47C 17/20

(54) **In ein Bett umwandelbares Sitzmöbel**
Sitting furniture convertible into bed
Siège transformable en lit

(30) Priorität: 28.04.2005 AT 2722005
(43) Veröffentlichungstag der Anmeldung: 02.11.2006
(73) Patentinhaber: Hodry Metallwarenfabrik R.Hoppe Ges.m.b.H & Co. KG, 3430 Tulln (AT)
(72) Erfinder: Moldovan, Adrian, 1230 Wien (AT)
(74) Vertreter: Rippel, Andreas

(56) Entgegenhaltungen:
- AT-B- 406 111
- FR-A- 531 404
- US-A- 2 291 391

## Beschreibung

Die Erfindung bezieht sich auf ein Sitzmöbel, das in ein Bett umwandelbar ist, mit einem Sitzrahmen, unter dem in der Sitzstellung des Möbels ein gepolsterter Zusatzrahmen eingeschoben ist, der an einem Auszug mittels eines Beschlages heb- und senkbar gelagert ist.

Derartige Möbel sind in vielen Ausführungsformen in Gebrauch. Es ist dabei möglich, eine Liegefläche durch Aneinanderreihung einer umklappbaren Rückenlehne, des gepolsterten Sitzrahmens und des gepolsterten Zusatzrahmens zu schaffen. Eine Liegefläche kann aber auch nur durch die nebeneinander liegenden Sitz- und Zusatzrahmen gebildet werden.

Die Beschläge zum Anheben des Zusatzrahmens sind im allgemeinen nicht auf die Aufnahme von größeren seitlichen Kräften geeignet, sodaß bei einem seitlichen Druck auf den angehobenen Zusatzrahmen dieser aus seiner Lage gebracht werden kann.

Es wurde schon versucht Abhilfe dadurch zu schaffen, daß die Polsterung teilweise noch in das Grundgestell hineinragt und somit ein seitliches Ausweichen verhindert werden kann. Außerdem könnte man die angrenzenden Polster so stark tapezieren, daß ein Reibschluß entsteht. In beiden Fällen wird jedoch die Betätigung schwergängiger.

Die Erfindung hat es sich zum Ziel gesetzt ein Möbel der eingangs genannten Art zu schaffen, bei dem der Zusatzrahmen in der angehobenen Stellung auch nach der Seite hin fixiert ist. Erreicht wird dies dadurch, daß der Zusatzrahmen mit dem Auszug an der in der Sitzstellung dem Sitzrahmen zugewendeten Seite über kreuzweise laufende flexible Zugorgane verbunden ist.

Durch diese erfindungsgemäß angeordneten Zugorgane, die als Seil, Gurt oder dergleichen ausgebildet sein können, wird ein seitliches Ausweichen des Zusatzrahmens in der angehobenen Stellung sicher verhindert.

Damit die erfindungsgemäß angeordneten Zugorgane in der abgesenkten Stellung des gepolsterten Zusatzrahmens nicht am Boden streifen bzw. sich irgendwo verhängen können, wird vorgeschlagen, daß die flexiblen Zugorgane durch wenigstens ein elastisches Band oder dergleichen von oben her gehalten werden.

Nachstehend ist die Erfindung anhand von in den Zeichnungen dargestellten Ausführungsbeispielen näher beschrieben, ohne auf diese Beispiele beschränkt zu sein. Dabei zeigen:
- Fig. 1: in teilweise geschnittener Seitenansicht ein in ein Bett umwandelbares Sitzmöbel, bei dem die Erfindung angewendet werden kann;
- Fig. 2: eine gegenüber der Fig. 1 vereinfachte Ausführungsform eines Auszuges, an dem ein Zusatzrahmen heb- und senkbar gelagert ist, wobei der Zusatzrahmen angehoben ist;
- Fig. 3: die Anordnung nach Fig. 2 bei abgesenktem Zusatzrahmen.

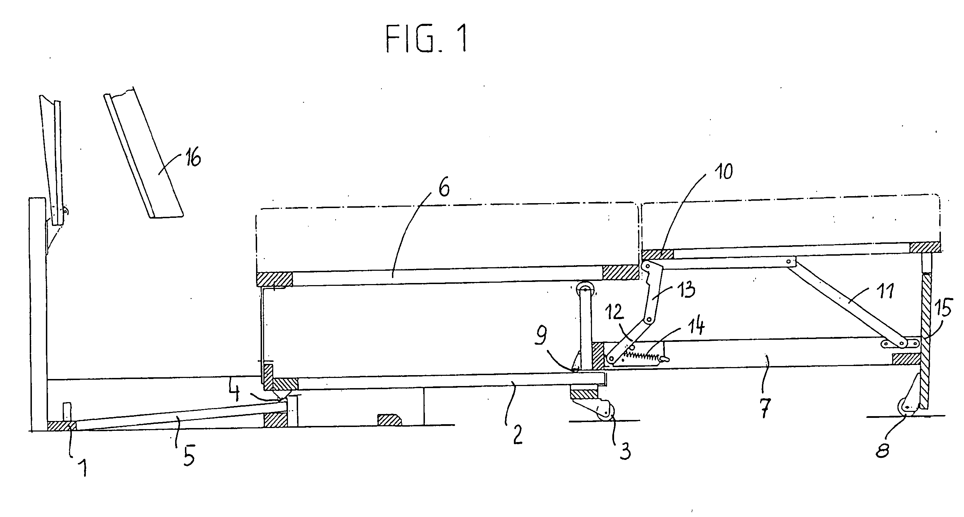

Gemäß Fig. 1 ist in einem Möbelgestell 1 ein als Wagen ausgebildetes Gestell 2 ein- und ausfahrbar. Das Gestell 2 ist dabei einerseits über Rollen 3 am Boden, andererseits über Rollen 4 an schrägen Schienen 5 fahrbar. Unter Einhaltung eines Zwischenraumes ist am Gestell 2 ein gepolsterter Sitzrahmen 6 abgestützt.

In den Zwischenraum kann in der nicht dargestellten Sitzstellung des Möbels ein Auszug 7 eingeschoben werden, der über Rollen 8 am Boden und über Rollen 9 am Gestell 2 abgestützt ist. Im Auszug 7 ist ein gepolsterter Zusatzrahmen 10 mittels eines Beschlages heb- und senkbar, der im gezeichneten Beispiel aus einer Schwinge 11, zwei miteinander gelenkig verbundenen Armen 12 und 13 sowie einer Feder 14 besteht.

Nach vorne ist der Auszug 7 durch eine Frontblende 15 abgedeckt. Zur Vervollständigung der Liegefläche ist eine umklappbare Rückenlehne 16 vorgesehen.

Soll das Möbel in die Sitzstellung verbracht werden, wird in bekannter Weise der Zusatzrahmen 10 mittels des Beschlages abgesenkt, der Auszug 7 in den Zwischenraum unter den gepolsterten Sitzrahmen 6 eingeschoben und das Gestell 2 samt dem Auszug 7 unter die Rückenlehne 16 geschoben.

Das eben beschriebene in Fig. 1 dargestellte Möbel ist Gegenstand des österreichischen Patentes Nr. 406.111 der Anmelderin. Die Beschreibung dieses Möbels soll nur dazu dienen, um den möglichen Anwendungsbereich vorliegender Erfindung näher zu definieren.

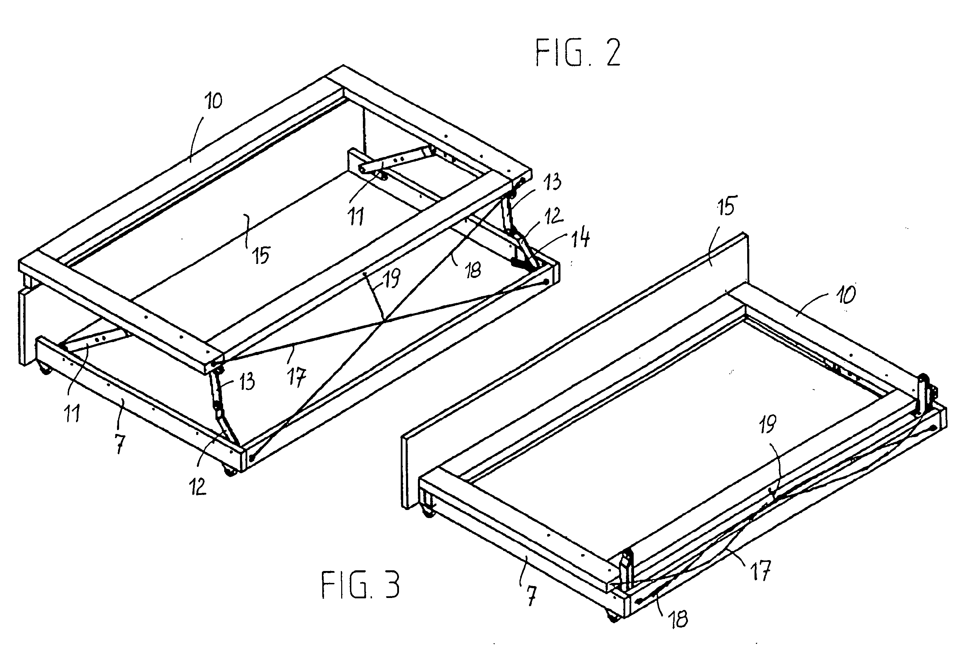

In den Fig. 2 und 3 ist der Auszug 7 vereinfacht dargestellt, um das Wesentliche der Erfindung besser zeigen zu können. Wie ersichtlich, ist der Zusatzrahmen 10 mit dem Auszug 7 über kreuzweise verlaufende flexible Zugorgane 17, 18 verbunden. Die Verbindung erfolgt dabei an der der Frontblende 15 abgewendeten Seite, das ist jene Seite, die in der Sitzstellung bzw. in der in Fig. 1 dargestellten halb ausgezogenen Stellung dem Sitzrahmen 6 zugewendet ist. Die Zugorgane 17, 18 sind im angehobenen Zustand des Zusatzrahmens 10 gespannt, wodurch ein seitliches Ausweichen des Zusatzrahmens 10 verhindert wird.

Damit in der abgesenkten Stellung des Zusatzrahmens 10 (Fig. 3) die flexiblen Zugorgane 17, 18 nicht am Boden schleifen, sind diese an ihrem Kreuzungspunkt durch ein elastisches Band 19 oder dergleichen von oben her gehalten.

Die elastischen Zugorgane können als Seile, Bänder oder ähnliches ausgebildet sein, wie überhaupt im Rahmen der Erfindung zahlreiche Abänderungen möglich sind. So ist die Erfindung selbstverständlich auch auf solche Möbel anwendbar, bei denen der Sitzrahmen 6 nicht an einem fahrbaren Gestell 2 sondern starr im Möbelgestell 1 abgestützt ist.

## Patentansprüche

1. In ein Bett umwandelbares Sitzmöbel mit einem Sitzrahmen (6), unter dem in der Sitzstellung des Möbels ein gepolsterter Zusatzrahmen (10) eingeschoben ist, der an einem Auszug (7) mittels eines Beschlages (11, 12, 13, 14) heb- und senkbar gelagert ist, **dadurch gekennzeichnet, daß** der Zusatzrahmen (10) mit dem Auszug (7) an der in der Sitzstellung dem Sitzrahmen (6) zugewendeten Seite über kreuzweise verlaufende flexible Zugorgane (17, 18) verbunden ist.

2. Möbel nach Anspruch 1, **dadurch gekennzeichnet, daß** die flexiblen Zugorgane (17, 18) durch wenigstens ein elastisches Band (19) oder dergleichen von oben her gehalten werden.

## Claims

1. Seating furniture that can be converted to a bed, with a seat frame (6) under which is pushed an upholstered additional frame (10) in the sitting position of the furniture, which additional frame is mounted so that it can be raised and lowered on a pull-off (7) by means of a fitting (11, 12, 13, 14), **characterised in that** the additional frame (10) is connected to the pull-off (7) on the side facing seat frame (6) in the sitting position by flexible pulling mechanisms (17, 18) running crosswise.

2. Furniture according to Claim 1, **characterised in that** the flexible pulling mechanisms (17, 18) are retained from above by at least one elastic strip (19) or the like.

## Revendications

1. Meuble d'assise, convertible en lit, avec un cadre d'assise (6), sous lequel, en position assise du meuble est inséré un cadre supplémentaire rembourré (10), qui est logé de façon relevable et abaissable sur une rallonge (7), au moyen d'une armature (11, 12, 13, 14), **caractérisé en ce que** le cadre supplémentaire (10) est relié à la rallonge (7) sur le côté faisant face au cadre d'assise (6) en position assise par l'intermédiaire d'organes de traction (17, 18) flexibles s'étendant en croix.

2. Meuble selon la revendication 1, **caractérisé en ce que** les organes de traction (17, 18) flexibles sont maintenus par le haut par au moins une bande élastique (19) ou similaire.
